# EUROPÄISCHE PATENTSCHRIFT

(11) **EP 1 452 760 B1**
(45) Veröffentlichungstag und Bekanntmachung des Hinweises auf die Patenterteilung: **12.04.2006**
(21) Anmeldenummer: 04003447.2
(22) Anmeldetag: 17.02.2004
(51) Int. Cl.: F16D 13/58

(54) **Kraftbeaufschlagungsanordnung für eine Reibungskupplung**
Force transmitting arrangement for friction clutch
Dispositif de transmission de force pour un embrayage à friction

(30) Priorität: 25.02.2003 DE 10307865
(43) Veröffentlichungstag der Anmeldung: 01.09.2004
(73) Patentinhaber: ZF Sachs AG, 97424 Schweinfurt (DE)
(72) Erfinder: Dörfler, Matthias, Dipl.-Ing., 97453 Schonungen (DE); Bindig, Sebastian, Dipl.-Ing. (FH), 97503 Gädheim (DE); Schubert, Thomas, Dipl.-Ing. (FH), 97508 Grettstadt (DE); Pfeifer, Jürgen, Dipl.-Ing. (FH), 97469 Gochsheim (DE)

(56) Entgegenhaltungen:
- DE-A- 19 905 373
- FR-A- 2 583 483
- FR-A- 2 583 484

## Beschreibung

Die vorliegende Erfindung betrifft eine Kraftbeaufschlagungsanordnung für eine Reibungskupplung, umfassend einen ringartigen Beaufschlagungskörper mit einer Mehrzahl von in Umfangsrichtung aufeinander folgenden, sich im Wesentlichen radial erstreckenden Beaufschlagungsabschnitten sowie jeweils zwei benachbarte Beaufschlagungsabschnitte koppelnden, mit diesen integral ausgebildeten Kopplungsabschnitten , wobei der Beaufschlagungskörper (12) im Bereich von wenigstens einem der Kopplungsabschnitte (16) eine geringere Materialdicke aufweist, als im Bereich der Beaufschlagungsabschnitte.

Derartige Kraftbeaufschlagungsanordnungen dienen in Reibungskupplungen dazu, auf Anpressplatten derselben eine Kraft auszuüben, um diese in Reibanlage beispielsweise an Reibbelägen einer Kupplungsscheibe zu pressen. Bei herkömmlichen Reibungskupplungen des NORMAL-GESCHLOSSEN-Typs sind im Allgemeinen diese Kraftbeaufschlagungsanordnungen als sogenannte Membranfedern oder Tellerfedern ausgebildet und stützen sich bezüglich einem Kupplungsgehäuse einerseits und einer Anpressplatte andererseits ab, um somit unter der durch diese Kraftbeaufschlagungsanordnungen selbst bereitgestellten Vorspannkraft die Anpressplatte zu beaufschlagen. Zur Durchführung von Ausrückvorgängen, also zur Entlastung der Anpressplatte, wirkt ein Ausrückermechanismus auf eine derartige Kraftbeaufschlagungsanordnung bzw. Membranfeder ein. Bei Reibungskupplungen des NORMAL-OFFEN-Typs wird die zur Erlangung eines Einrückzustands erforderliche Anpresskraft nicht durch die eigene Vorspannkraft einer Kraftbeaufschlagungsanordnung bereitgestellt, sondem es ist ein Einrückermechanismus vorhanden, der dann über eine im Wesentlichen nur zur Kraftübertragung bzw. Umsetzung dienende Kraftbeaufschlagungsanordnung auf eine Anpressplatte einwirkt und somit zur Erlangung eines Einrückzustands diese gegen Reibbeläge o. dgl. presst. Hier hat die Kraftbeaufschlagungsanordnung im Wesentlichen die Funktion durch Bereitstellung bestimmter Hebelverhältnisse eine Übertragung der Kraft von einem im Wesentlichen zentral, also drehachsennah positionierten Einrückermechanismus auf einen weiter radial außen gelegenen Bereich einer Anpressplatte zu erlangen.

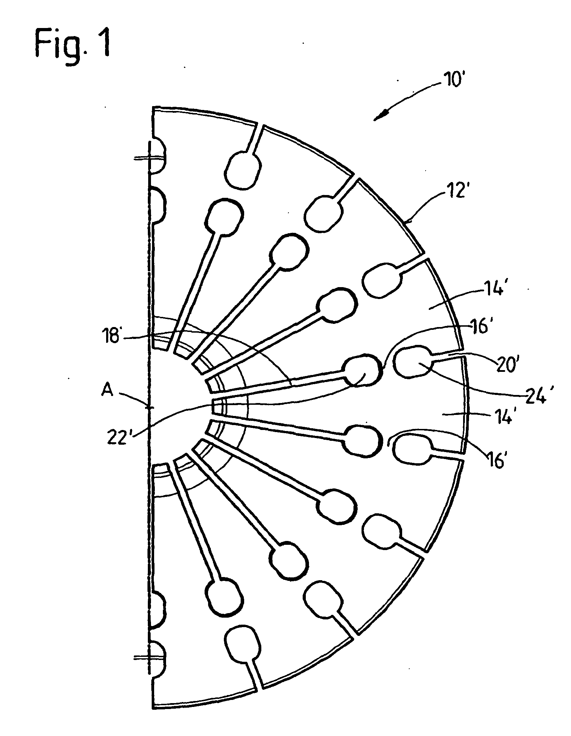

Eine derartige Kraftbeaufschlagungsanordnung ist in Fig. 1 in Teil-Axialansicht gezeigt. Man erkennt hier, dass die Kraftbeaufschlagungsanordnung 10' einen bezüglich einer im Drehbetrieb vorhandenen Drehachse A zentrierten, ringartigen Beaufschlagungskörper 12' aufweist. Dieser Beaufschlagungskörper 12' wiederum umfasst eine Mehrzahl von näherungsweise radial sich erstreckenden und in Umfangsrichtung um die Drehachse A aufeinander folgenden Beaufschlagungsabschnitten 14'. In Umfangsrichtung aufeinander folgende Beaufschlagungsabschnitte 14' sind durch einen Kopplungsabschnitt 16' miteinander gekoppelt. Die Kopplungsabschnitte 16' sind mit den Beaufschlagungsabschnitten 14' integral ausgebildet, was beispielsweise dadurch erlangt werden kann, dass der gesamte Beaufschlagungskörper 12' durch Ausstanzen aus Blechmaterial hergestellt wird. Bei diesem Ausstanzvorgang können dann zwischen in Umfangsrichtung aufeinander folgenden Beaufschlagungsabschnitten 14' jeweils radial innerhalb und radial außerhalb der Kopplungsabschnitte 16' Zwischenräume 18' und 20' gebildet werden. Man erkennt, dass die Zwischenräume 18' sich ausgehend vom radial inneren Endbereich des Beaufschlagungskörpers 12' näherungsweise radial bezüglich der Drehachse A erstrecken und in ihrem an einen jeweiligen Kopplungsereich 16' angrenzenden Endbereich 22' mit vergrößerter Breite - gemessen in Umfangsrichtung - ausgebildet sind. Entsprechendes gilt auch für die radial äußeren Zwischenräume 20', welche vom radial äußeren Endbereich des Beaufschlagungskörpers 12' sich näherungsweise radial nach innen erstrecken und in ihrem an den jeweils zugeordneten Kopplungsabschnitt 16' angrenzenden Endbereich 24' ebenfalls mit vergrößerter Dicke - wiederum gemessen in Umfangsrichtung - ausgebildet sind.

Es ergibt sich somit in der Axialansicht näherungsweise eine Konfiguration, wie sie beispielsweise auch für bei Kupplungen des NORMAL-GESCHLOSSEN-Typs eingesetzte Membranfedem vorgesehen ist. Da es jedoch bei Kupplungen des NORMAL-OFFEN-Typs die Zielsetzung ist, durch die Kraftbeaufschlagungsanordnung 10' möglicht keinen eigenen Kraftbeitrag bereitzustellen, so dass die erforderliche Einrückkraft ausschließlich durch den Einrückermechanismus geliefert wird bzw. im Wesentlichen keine dem Einrückermechanismus entgegen wirkende Kraftkomponente in der Kraftbeaufschlagungsanordnung 10' erzeugt wird, wird diese aus einem entsprechend elastischen Material bzw. entsprechend dünnen Material bereitgestellt. Weiter werden die Kopplungsabschnitte 16' mit vergleichsweise geringer radialer Erstreckung bereitgestellt, so dass insbesondere im Bereich dieser Kopplungsabschnitte 16' der zur Durchführung von Einrückvorgängen bzw. Ausrückvorgängen erforderlichen Verformung des Beaufschlagungskörpers 12' möglichst wenig Kraft entgegengesetzt wird.

Aus der FR 2 583 483 A1 ist eine Reibungskupplung des NORMAL-GESCHLOSSEN-TYPS bekannt, bei der die Anpresskraft durch eine Membranfeder erzeugt wird, die sich in üblicher Weise aus einem radial außen liegenden, in Umfangsrichtung geschlossenen Tellerfederbereich und von diesem nach radial innen sich erstreckenden einzelnen Betätigungshebeln zusammen setzt. Diese Betätigungshebel weisen eine konstante Materialstärke auf und münden in die Tellerfeder im Durchmesserabschnitt DI ein. Der Tellerfederbereich selbst muss hierbei als geschlossener Ring ausgebildet sein, um die Federkraft erzeugen zu können. Um Rissbildung an schafkantigen Ecken zu vermeiden weisen die stark belasteten Randbereiche bei Dl im Übergang zu den Betätigungshebeln ausgeformte Rundungen auf. Der Außendurchmesserbereich DE ist hierfür ohne Einschnitte gleich bleibend Rund ausgeführt. Mittig innerhalb des gering belasteten Tellerfederbereiches ist die Membranfeder in ihrer Materialstärke zurück genommen. Eine solche Ausführung weist eine Gewichtseinsparung auf, bei der der wenig belastete innere Ringbereich der Tellerfeder der geringeren Spannungsbelastung angepasst ist. Eine solche Membranfeder weist aber dennoch eine sehr hohe Eigensteifigkeit auf, was durch ihren Einsatz als Membranfeder belegt wird.

Es ist die Aufgabe der vorliegenden Erfindung, eine Kraftbeaufschlagungsanordnung für eine Reibungskupplung bereitzustellen, bei welcher der Eigenkraftbeitrag bei Durchführung von Einkuppelvorgängen oder Auskuppelvorgängen vermindert ist.

Erfindungsgemäß wird diese Aufgabe gelöst durch eine Kraftbeaufschlagungsanordnung für eine Reibungskupplung, umfassend einen ringartigen Beaufschlagungskörper mit einer Mehrzahl von in Umfangsrichtung auf einander folgenden, sich im Wesentlichen radial erstreckenden Beaufschlagungsabschnitten sowie jeweils zwei benachbarte Beaufschlagungsabschnitte koppelnden, mit diesen integral ausgebildeten Kopplungsabschnitten, wobei der Beaufschlagungskörper im Bereich von wenigstens einem der Kopplungsabschnitte eine geringere Materialdicke aufweist, als im Bereich der Beaufschlagungsabschnitte, so dass jeweils zwei benachbarte Beaufschlagungsabschnitte (14) radial außerhalb und radial innerhalb des diese koppelnden Kopplungsabschnitts (16) durch im Wesentlichen radial sich erstreckende Zwischenräume (18, 20) getrennt sind und dass der radial äußere Zwischenraum (20) oder/und der radial innere Zwischenraum (18) in seinem an den Kopplungsabschnitt (16) anschließenden Bereich (24, 22) mit vergrößerter Breite ausgebildet ist.

Durch das Bereitstellen des Beaufschlagungskörpers mit verminderter Materialstärke bzw. Materialdicke im Bereich von wenigstens einem der Kopplungsabschnitte wird es möglich, den Beaufschlagungskörper im Bereich der Beaufschlagungsabschnitte selbst mit vergleichsweise dickem Material aufzubauen, so dass die durch den Einrückermechanismus gelieferten Kräfte im Wesentlichen ohne Verformung der Beaufschlagungsabschnitte übertragen werden können, während der oder die mit dünnerem Material aufgebauten Kopplungsabschnitte bei einer im Kupplungsbetrieb auftretenden Verformung des Beaufschlagungskörpers eine vergleichsweise geringe bzw. im Wesentlichen keine Gegenkraft erzeugen. Somit können die beiden an sich gegenläufigen Anforderungen einer möglichst hohen Stabilität im Bereich der Beaufschlagungsabschnitte und einer möglichst hohen Elastizität bzw. geringen Stabilität im Bereich der Kopplungsabschnitte in sehr vorteilhafter Weise kombiniert werden.

Diese Maßnahme trägt zum einen weiter zum Erhöhen der Elastizität im Bereich der Kopplungsabschnitte bei, hat zum anderen aber den elementaren Vorteil, dass dadurch Volumen bzw. Bauraum geschaffen wird, in welchem dann, wenn der wenigstens eine Kopplungsabschnitt durch eine Umformungsbearbeitung dünner gemacht werden soll, das bei dieser Umformungsbearbeitung verdrängte Material aufgenommen werden kann. Selbstverständlich ist es auch möglich, alternativ oder zusätzlich zu der Umformungsbearbeitung den Beaufschlagungskörper im Bereich des wenigstens einen der Kopplungsabschnitte durch spanabhebende Bearbeitung dünner zu machen. Der Beaufschlagungskörper kann beispielsweise aus Blechmaterial gebildet sein.

Die vorliegende Erfindung betrifft ferner eine Reibungskupplung, umfassend wenigstens eine erfindungsgemäße Kraftbeaufschlagungsanordnung.

Weiter betrifft die vorliegende Erfindung ein Verfahren zur Herstellung einer erfindungsgemäßen Kraftbeaufschlagungsanordnung für eine Reibungskupplung, welches Verfahren die folgenden Schritte umfasst:
a) Bereitstellen eines ringartigen Beaufschlagungskörpers mit einer Mehrzahl von in Umfangsrichtung aufeinander folgenden, sich im Wesentlichen radial erstreckenden Beaufschlagungsabschnitten sowie jeweils zwei benachbarte Beaufschlagungsabschnitte koppelnden, mit diesen integral ausgebildeten Kopplungsabschnitten,
b) Vermindern der Materialdicke des Beaufschlagungskörpers im Bereich von wenigstens einem der Kopplungsabschnitte.

Dabei wird bei einer besonders einfach realisierbaren und vor allem auch kostengünstig durchführbaren Varinate vorgeschlagen, dass der Schritt a) das Ausstanzen des Beaufschlagungskörpers aus einem Blechmaterial umfasst.

Um bereits bei der Bereitstellung des Rohlings für den Beaufschlagungskörper dafür Sorge zu tragen, dass beim nachfolgenden Dünnermachen desselben im Bereich von wenigstens einem Kopptungsabschnitt Volumen zur Aufnahme von bei einem Umformungsvorgang zu verdrängendem Material geschaffen wird, wird weiter vorgeschlagen, dass der Schritt a) das Bereitstellen des Beaufschlagungskörpers mit zwischen benachbarten Beaufschlagungsabschnitten radial außerhalb und radial innerhalb des diese koppelnden Kopplungsabschnitts sich im Wesentlichen radial erstreckenden Zwischenräumen umfasst, wobei der radial äußere Zwischenraum oder/und der radial innere Zwischenraum in seinem an den Kopplungsabschnitt anschließenden Bereich mit vergrößerter Breite gebildet wird. Insbesondere in Verbindung mit diesem Aspekt wird dann weiter vorgeschlagen, dass der Schritt b) eine Umformungsbearbeitung des Beaufschlagungskörpers im Bereich des wenigstens einen der Kopplungsabschnitte umfasst, wobei bei der Umformungsbearbeitung wenigstens ein Teil des Materials des Beaufschlagungskörpers in Richtung zu wenigstens einem Bereich mit vergrößerter Breite eines Zwischenraums zwischen benachbarten Beaufschlagungsabschnitten verdrängt wird. Selbstverständlich kann bei dem erfindungsgemäßen Verfahren alternativ oder zusätzlich zu dem Dünnermachen des Beaufschlägungskörpers im Bereich von wenigstens einem der Kopplungsabschnitte durch Materialumformung auch noch Material bei Durchführung einer spanabhebenden Bearbeitung, also beispielsweise eines Fräsvorgangs, eines Schleifvorgangs o. dgl. abgenommen werden.

Die vorliegende Erfindung wird nachfolgend mit Bezug auf die beiliegenden Zeichnungen detailliert beschrieben. Es zeigt:
- Fig. 1: eine Teil-Axialansicht einer Kraftbeaufschlagungsanordnung mit ringartigem Beaufschlagungskörper;
- Fig. 2: eine Teil-Längsschnittansicht einer gedrückten Druckplattenbaugruppe einer Reibungskupplung des NORMAL-OFFEN-Typs;
- Fig. 3: eine Teil-Längsschnittansicht einer gezogenen Druckplattenbaugruppe einer Reibungskupplung des NORMAL-OFFEN-Typs;
- Fig. 4: eine Teil-Längsschnittansicht einer Doppelkupplung mit zwei Kupplungsbereichen des NORMAL-OFFEN-Typs;
- Fig. 5.: eine Teil-Axialansicht einer erfindungsgemäß aufgebauten Kraftbeaufschlagungsanordnung;
- Fig. 6: ein vergrößertes Detail der in Fig. 5 dargestellten Kraftbeaufschlagungsanordnung;
- Fig. 7: die in Fig. 5 dargestellte Kraftbeaufschlagungsanordnung in geschnittener, perspektivischer Darstellung;
- Fig. 8: vergrößert das im Kreis VIII der Fig. 7 erkennbare Detail.

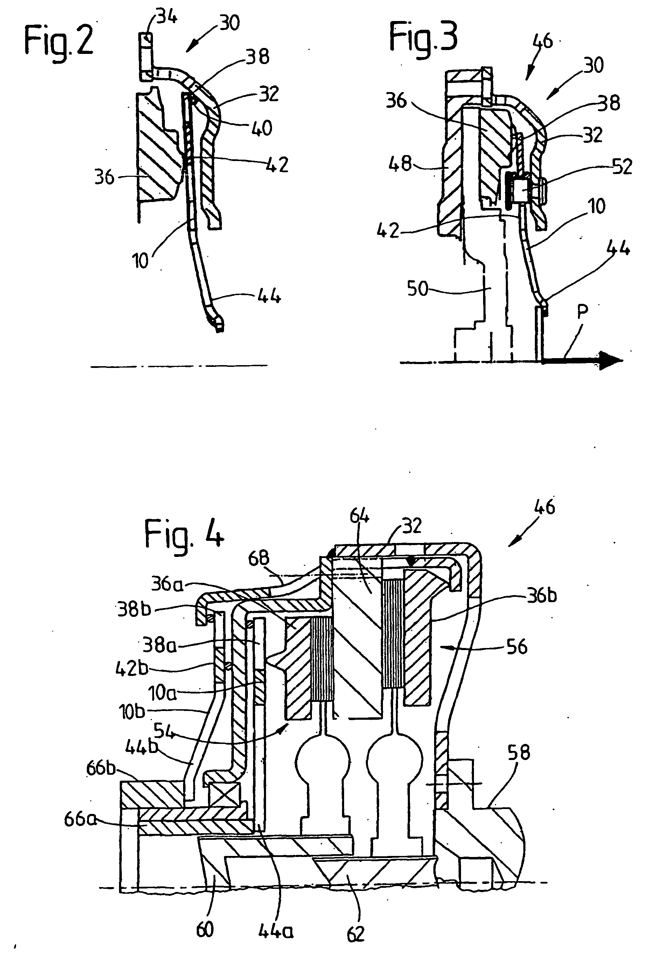

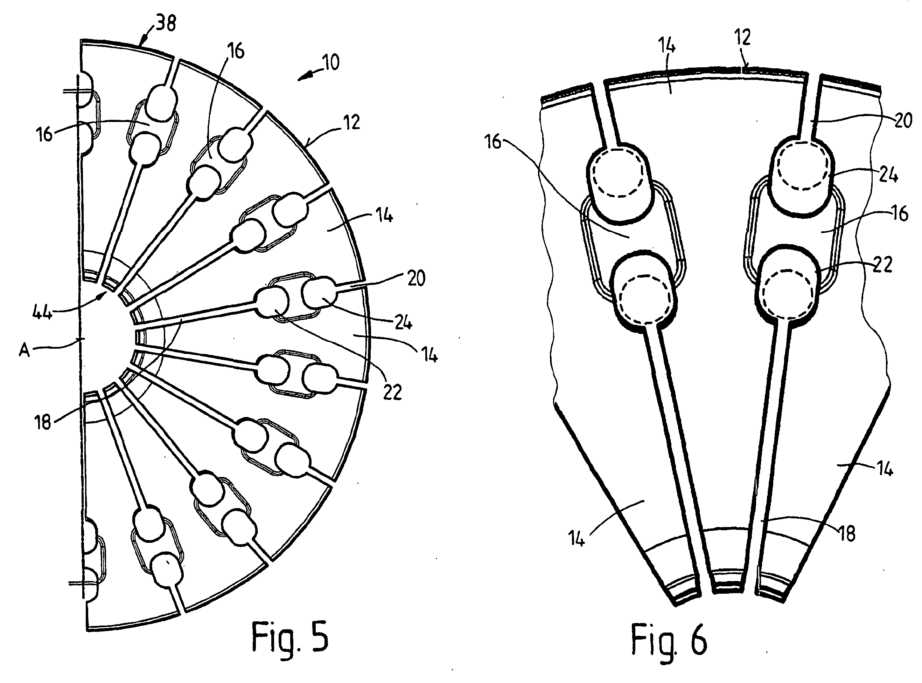

Bevor mit Bezug auf die Figuren 5 bis 8 eine erfindungsgemäße Kraftbeaufschlagungsanordnung beschrieben wird, werden mit Bezug auf die Figuren 2 bis 4 im Folgenden verschiedene Typen von Reibungskupplungen bzw. Druckplattenbaugruppen dafür beschrieben, bei welchen eine derartige Kraftbeaufschlagungsanordnung zum Einsatz kommen kann.

So zeigt die Fig. 2 eine Druckplattenbaugruppe 30 einer Kraftfahrzeugreibungskupplung, welche ein allgemein mit 32 bezeichnetes Gehäuse aufweist, das in einem radial äußeren flanschartigen Bereich 34 mit einer hier nicht dargestellten Schwungmasse einer Reibungskupplung fest verbunden werden kann.

In dem Gehäuse 32 ist eine Anpressplatte 36 vorgesehen, welche beispielsweise durch Tangentialblattfedern mit dem Gehäuse 32 drehfest verbunden ist, bezüglich diesem jedoch axial verlagerbar ist. Eine Kraftbeaufschlagungsanordnung 10 ist in ihrem radial äußeren Bereich 38 an der Innenseite des Gehäuses 32 beispielsweise über einen Drahtring 40 o. dgl. abgestützt und beaufschlagt in einem radial weiter innen gelegenen Bereich 42 bei Durchführung eines Einrückvorgangs die Anpressplatte 36. Am radial inneren Bereich 44 der Kraftbeaufschlagungsanordnung 10 kann ein Einrückermechanismus drückend angreifen, d.h. zur Durchführung von Einrückvorgängen diesen radial inneren Bereich 44 in Richtung auf die Anpressplatte 36 zu drücken, so dass auch der radiale Bereich 42, welcher die Anpressplatte 36 direkt beaufschlagt, verstärkt gegen die Anpressplatte 36 presst. Es ist hier also eine Druckplattenbaugruppe 30 für eine Reibungskupplung des NORMAL-OFFEN-Typs gezeigt, bei welcher die Einrückkraft durch drückendes Beaufschlagen der Kraftbeaufschlagungsanordnung 10 erzeugt wird.

Im Gegensatz dazu zeigt die Fig. 3 eine Reibungskupplung 46, die bzw. deren Druckplattenbaugruppe 30 zwar auch von dem NORMAL-OFFEN-Typ ist, bei welcher jedoch eine ziehende Beaufschlagung zur Durchführung von Einrückvorgängen erfolgt. Ziehende Beaufschlagung heißt hier, dass in der Richtung eines Pfeils P eine Einrückkraft auf den radial inneren Endbereich 44 der Kraftbeaufschlagungsanordnung 10 ausgeübt wird, also eine in Richtung von einer Schwungmasse 48 bzw. einer Kupplungsscheibenanordnung 50 der Reibungskupplung 46 weggerichtete Kraft. Die über eine Mehrzahl von Distanzbolzen 52 o. dgl. am Gehäuse 32 in ihrem mittleren Bereich 42 getragene Kraftbeaufschlagungsanordnung 10 presst dann mit ihrem radial äußeren Bereich 38 gegen die Anpressplatte 36 und diese somit gegen die Kupplungsscheibenanordnung 50.

Während in den Figuren 2 und 3 Reibungskupplungen bzw. Druckplattenbaugruppen herkömmlicher Reibungskupplungen gezeigt sind, zeigt die Fig. 4 eine sogenannte Doppelkupplung. Bei dieser Doppelkupplung umfasst die Reibungskupplung 46 zwei allgemein mit 54 bzw. 56 bezeichnete Kupplungsbereiche, über welche ein von einer Antriebswelle 58 bereitgestelltes Antriebsdrehmoment wahlweise auf eine von zwei koaxial zueinander angeordneten Getriebeeingangswellen 60, 62 übertragen werden kann. Die Reibungskupplung bzw. Doppelkupplung 46 umfasst hier ein mit der Antriebswelle 58 gekoppeltes Gehäuse 32, das mit einer für beide Kupplungsbereiche 54, 56 als Widerlager dienenden Zwischenplatte 64 fest verbunden ist. Eine Anpressplatte 36a des ersten Kupplungsbereichs 54 kann durch eine am Gehäuse 32 sich abstützende Kraftbeaufschlagungsanordnung 10a in Richtung auf die Zwischenplatte 64 zu gepresst werden, wobei die Kraftbeaufschlagungsanordnung 10a sich an ihrem radial äußeren Bereich 38a am Gehäuse 32 abstützt und in ihrem radial inneren Bereich 44a durch einen zugeordneten und nur schematisch angedeuteten Einrückermechanismus 66a beaufschlagt werden.

Eine Anpressplatte 36b ist an der anderen axialen Seite der Zwischenplatte 64 angeordnet. Durch ein oder mehrere Kraftübertragungselemente 68 kann die von einem Einrückermechanismus 66b bereitgestellte Einrückkraft über eine Kraftbeaufschlagungsanordnung 10b unter axialer Überbrückung des ersten Kupplungsbereichs 54 und der Zwischenplatte 64 auf die Anpressplatte 36b übertragen werden. Hier ist die Kraftbeaufschlagungsanordnung 10b in ihrem radialen äußeren Bereich 38b bezüglich des Kraftübertragungselements 68 abgestützt, ist in einem radial weiter innen gelegenen Bereich 42b bezüglich des Gehäuses 32 abgestützt und kann radial innen im Bereich 44b vom Einrückermechanismus 66b beaufschlagt werden.

Es sei darauf hingewiesen, dass die in den Figuren 2 bis 4 dargestellten Kupplungen bzw. Kupplungsbereiche nur beispielhaft dargestellt sind und als Vertreter für eine Vielzahl derartiger oder ähnlich aufgebauter Kraftfahrzeugreibungskupplungen zu betrachten sind. Selbstverständlich können in Verbindung mit den nachfolgend noch detaillierter erläuterten Prinzipien der vorliegenden Erfindung auch Mehrscheibenkupplungen, Lamellenkupplungen, Kupplungen mit Verschleißausgleich, Kupplungen kombiniert mit Torsionsschwingungsdämpfern und dergleichen zum Einsatz kommen.

Mit Bezug auf die Figuren 5 bis 8 wird nunmehr eine erfindungsgemäße Kraftbeaufschlagungsanordnung 10 beschrieben, wie sie beispielsweise auch in Verbindung mit den vorangehend geschilderten Kupplungen zum Einsatz kommen kann.

Wie man in Fig. 5 erkennt, ist die Kraftbeaufschlagungsanordnung 10 von allgemein ringartiger Struktur und weist einen Beaufschlagungskörper 12 auf. Dieser Beaufschlagungskörper 12 umfasst eine Mehrzahl von in Umfangsrichtung aufeinander folgenden Beaufschlagungsabschnitten 14, die sich bezüglich einer Drehachse A im Wesentlichen radial erstrecken. Mit ihren radial inneren Enden bilden diese Beaufschlagungsabschnitte 14 den vorangehend beschriebenen radial inneren Bereich 44 der Kraftbeaufschlagungsanordnung. Mit ihren äußeren Enden bilden die Beaufschlagungsabschnitte 14 den radial äußeren Bereich 38. In einem zwischen dem radial inneren Bereich 44 und dem radial äußeren Bereich 48 gelegenen Bereich sind die Beaufschlagungsabschnitte 14 durch die vorangehend mit Bezug auf die Fig. 1 bereits beschriebenen Kopplungsabschnitte 16 miteinander verbunden. Die Beaufschlagungsabschnitte 14 und die Kopplungsabschnitte 16 sind integraler Bestandteil des Beaufschlagungskörpers 12, welcher beispielsweise durch Ausstanzen aus Blechmaterial hergestellt werden kann. Bei diesem Stanzvorgang werden auch die bereits angesprochenen Zwischenräume 18, 20 mit ihren jeweiligen erweiterten kopplungsabschnittnahen Endbereichen 22, 24 gebildet.

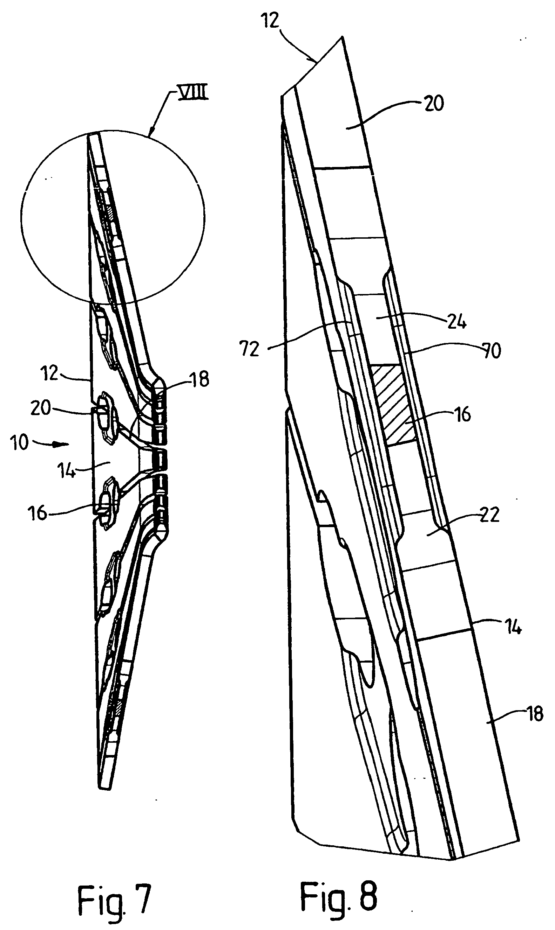

Gemäß der vorliegenden Erfindung wird die erforderliche Elastizität bzw. Flexibilität des Beaufschlagungskörpers 12 zur im Wesentlichen gegenkraftfreien Durchführung von Betätigungsvorgängen nicht nur dadurch erlangt, dass die Kopplungsabschnitte 16 in radialer Richtung eine vergleichsweise geringe Erstreckung aufweisen und durch das Bereitstellen der erweiterten Endbereiche 22, 24 auch eine relativ große Umfangserstreckung aufweisen. Vielmehr ist, wie beispielsweise in den Figuren 6 und 8 deutlich erkennbar, der Beaufschlagungskörper 12 in denjenigen Bereichen, in welchen Kopplungsabschnitte 16 liegen, mit geringerer Materialstärke ausgebildet, als in dem verbleibenden Bereich, also im Wesentlichen dem die Beaufschtagungsabschnitte 14 bildenden Bereich. Wie man insbesondere in der Schnittansicht der Fig. 8 erkennt, können an beiden axialen Seiten des Beaufschlagungskörpers 12 Einsenkungen 70, 72 gebildet sein, die in radialer Richtung und in Umfangsrichtung sich jeweils geringfügig über die entsprechende Erstreckung eines Kopplungsabschnitts 16 hinaus erstrecken und somit sich auch in den Bereich der erweiterten Endbereiche 22, 24 der Zwischenräume 18, 20 bzw. der Beaufschlagungsabschnitte erstrecken.

Die Herstellung dieser vertieften Bereiche 70, 72, welche letztendlich zur Folge haben, dass im Bereich der Kopplungsabschnitte 16 der Beaufschlagungskörper 12 eine geringere Materialstärke aufweist, kann beispielsweise durch spanbahebenede Bearbeitung erfolgen. Grundsätzlich ist es jedoch auch möglich, durch Materialumformung, also Press-, Wälz- oder Rollvorgänge dasjenige Material des Beaufschlagungskörpers 12, welches zuvor die in Fig. 8 erkennbaren Vertiefungsbereiche 70, 72 ausfüllt, zu verdrängen, so dass sich ebenfalls eine geringere Dicke im Bereich der Kopplungsabschnitte 16 ergibt. Insbesondere in Verbindung mit dieser Materialumformungsbearbeitung, welche selbstverständlich auch nach Durchführung einer spanabhebenden Bearbeitung vorgenommen werden kann oder auf welche selbstverständlich auch noch eine spanbabhebende Bearbeitung folgen kann, ist das Bereithalten der erweiterten Endbereichde 22, 24 der Zwischenräume 18, 20 vorteilhaft. Diese erweiterten Endbereiche können das aus dem Bereich der Kopplungsabschnitte bzw. Vertiefungen 70, 72 verdrängte Material aufnehmen. Diese Materialaufnahme kann im Extremfall so weit gehen, dass von diesen erweiterten Endbereichen 22, 24 nur noch die in der Fig. 6 mit gestrichelter Kreislinie eingezeichneten Öffnungen verbleiben. Diese Öffnungen können dann, um sie auf eine definierte Größe und Lage zu bringen, beispielsweise durch Stanzen nachbearbeitet werden. Auf diese Art und Weise kann sichergestellt werden, dass das aus dem Bereich der Kopplungsabschnitte 16 verdrängte Material nicht in anderen Bereichen der Beaufschlagungsabschnitte 14 zu Materialanhäufungen führt, die dann ggf. wiederum die Flexibilitätseigenschaften bzw. Elastizitätseigenschaften des gesamten Beaufschlagungskörpers 12 negativ, beeinflussen.

Bei Ausgestaltung des Beaufschlagungskörpers 12 aus Blechmaterial, das eine Anfangsdicke von etwa 5 mm hat, kann mit der vorliegenden Erfindung im Bereich der Kopplungsabschnitte durch beidseitiges Umformen bzw. Abtragen dafür gesorgt werden, dass in diesen Bereichen eine Materialstärke von etwa 2,5 mm verbleibt. Daraus resultiert insbesondere in diesen Kopplungsabschnitten 16 eine erheblich größere Flexibilität mit der Folge, dass der durch den Einrückermechanismus erzeugten Einrückkraft wesentlich weniger Reaktionskraft aus dem Beaufschlagungskörper 12 heraus entgegengesetzt wird.

Es ist selbstverständlich, dass die in den Figuren 5 bis 8 gezeigte Kraftbeaufschlagungsanordnung in verschiedenen Bereichen variiert werden kann. So können beispielsweise die einzelnen Kraftbeaufschlagungsabschnitte abweichend von der dargestellten sich nach radial außen erweiternden Formgebung auch mit in radialer Richtung betrachtet im Wesentlichen konstanter Umfangsbreite bereitgestellt werden. Auch ist es selbstverständlich möglich, die Verringerung der Dicke im Bereich der Kopplungsabschnitte 16 bzw. von zumindest einem dieser Kopplungsabschnitte 16 dadurch bereitzustellen, dass nur an einer Seite eine Materialabtragung oder Verformung stattfindet. Selbstverständlich müssen nicht notwendigerweise beide Zwischenräume 18 und 20, die jeweils radial innerhalb bzw. radial außerhalb eines Kopplungsabschnitts 16 liegen, mit der dargestellten Erweiterung 22 bzw. 24 ausgestaltet sein, wenngleich dies hinsichtlich der Elastizitätseigenschaften und auch hinsichtlich der bei Verformung auftretenden Spannungskonzentrationen vorteilhaft ist.

## Patentansprüche

1. Kraftbeaufschlagungsanordnung für eine Reibungskupplung, umfassend einen ringartigen Beaufschlagungskörper (12) mit einer Mehrzahl von in Umfangsrichtung aufeinander folgenden, sich im Wesentlichen radial erstreckenden Beaufschlagungsabschnitten (14) sowie jeweils zwei benachbarte Beaufschlagungsabschnitte (14) koppelnden, mit diesen integral ausgebildeten Kopplungsabschnitten (16), wobei der Beaufschlagungskörper (12) im Bereich von wenigstens einem der Kopplungsabschnitte (16) eine geringere Materialdicke aufweist, als im Bereich der Beaufschlagungsabschnitte (14)
**dadurch gekennzeichnet, dass**
jeweils zwei benachbarte Beaufschlagungsabschnitte (14) radial außerhalb und radial innerhalb des diese koppelnden Kopplungsabschnitts (16) durch im Wesentlichen radial sich erstreckende Zwischenräume (18, 20) getrennt sind und dass der radial äußere Zwischenraum (20) oder/und der radial innere Zwischenraum (18) in seinem an den Kopplungsabschnitt (16) anschließenden Bereich (24, 22) mit vergrößerter Breite ausgebildet ist.

2. Kraftbeaufschlagungsanordnung nach Anspruch 1,
**dadurch gekennzeichnet, dass** der Beaufschlagungskörper (12) aus Blechmaterial gebildet ist.

3. Kraftbeaufschlagungsanordnung nach einem der Ansprüche 1 bis 2, **dadurch gekennzeichnet, dass** der wenigstens eine der Kopplungsabschnitte (16) durch spanabhebende Bearbeitung oder/und durch Umformungsbearbeitung mit geringerer Dicke ausgebildet ist.

4. Reibungskupplung, umfassend wenigstens eine Kraftbeaufschlagungsanordnung (10) nach einem der vorangehenden Ansprüche.

5. Verfahren zur Herstellung einer Kraftbeaufschlagungsanordnung (10) nach einem der Ansprüche 1 bis 3, umfassend die Schritte:
a) Bereitstellen eines ringartigen Beaufschlagungskörpers (12) mit einer Mehrzahl von in Umfangsrichtung aufeinander folgenden, sich im Wesentlichen radial erstreckenden Beaufschlagungsabschnitten (14) sowie jeweils zwei benachbarte Beaufschlagungsabschnitte (14) koppelnden, mit diesen integral ausgebildeten Kopplungsabschnitten (16).
b) Vermindern der Materialdicke des Beaufschlagungskörpers (12) im Bereich von wenigstens einem der Kopplungsabschnitte (16).

6. Verfahren nach Anspruch 5,
**dadurch gekennzeichnet, dass** der Schritt a) das Ausstanzen des Beaufschlagungskörpers (12) aus einem Blechmaterial umfasst.

7. Verfahren nach Anspruch 5 oder Anspruch 6,
**dadurch gekennzeichnet, dass** der Schritt a) das Bereitstellen des Beaufschlagungskörpers (12) mit zwischen benachbarten Beaufschlagungsabschnitten (14) radial außerhalb und radial innerhalb des diese koppelnden Kopplungsabschnitts (16) sich im Wesentlichen radial erstreckenden Zwischenräumen (18, 20), wobei der radial äußere Zwischenraum (20) oder/und der radial innere Zwischenraum (18) in seinem an den Kopplungsabschnitt (16) anschließenden Bereich (24, 22) mit vergrößerter Breite gebildet wird.

8. Verfahren nach einem der Ansprüche 5 bis 7,
**dadurch gekennzeichnet, dass** der Schritt b) eine spanabhebende Bearbeitung des Beaufschlagungskörpers (12) im Bereich des wenigstens einen der Kopplungsabschnitte (16) umfasst.

9. Verfahren nach Anspruch 7 oder Anspruch 8, sofern auf Anspruch 7 rückbezogen,
**dadurch gekennzeichnet, dass** der Schritt b) eine Umformungsbearbeitung des Beaufschlagungskörpers (12) im Bereich des wenigstens einen der Kopplungsabschnitte (16) umfasst, wobei bei der Umfor mungsbearbeitung wenigstens ein Teil des Materials des Beaufschlagungskörpers (12) in Richtung zu wenigstens einem Bereich (22, 24) mit vergrößerter Breite eines Zwischenraums (18, 20) zwischen benachbarten Beaufschlagungsabschnitten (14) verdrängt wird.

## Claims

1. Force application arrangement for a friction clutch, comprising an annular application body (12) having a plurality of application sections (14), which are arranged in succession in the circumferential direction and extend substantially radially, and coupling sections (16), which each couple two respective adjacent application sections (14) and are integrally formed with the latter, the application body (12) having a lower material thickness in the region of at least one of the coupling sections (16) than in the region of the application sections (14),
**characterized in that**
in each case, two adjacent application sections (14) are divided radially outwards from and radially inwards from the coupling section (16) which couples said application sections (14) by intermediate spaces (18, 20) which extend substantially radially, and **in that** the radially outer intermediate space (20) or/and the radially inner intermediate space (18) is of increased width in its region (24, 22) which adjoins the coupling section (16).

2. Force application arrangement according to Claim 1,
**characterized in that** the application body (12) is formed from sheet metal.

3. Force application arrangement according to one of Claims 1 or 2,
**characterized in that** the at least one of the coupling sections (16) is formed with a smaller thickness by means of a cutting process or/and by means of a shaping process.

4. Friction clutch comprising at least one force application arrangement (10) according to one of the preceding claims.

5. Method for manufacturing a force application arrangement (10) according to one of Claims 1 to 3, comprising the steps:
a) providing an annular application body (12) having a plurality of application sections (14), which are arranged in succession in the circumferential direction and extend substantially radially, and coupling sections (16), which each couple two respective adjacent application sections (14) and are integrally formed with the latter,
b) reducing the material thickness of the application body (12) in the region of at least one of the coupling sections (16).

6. Method according to Claim 5,
**characterized in that** step a) comprises the process of punching out the application body (12) from sheet metal.

7. Method according to Claim 5 or Claim 6,
**characterized in that** step a) comprises the provision of the application body (12) having intermediate spaces (18, 20) which extend substantially radially between adjacent application sections (14) radially outwards from and radially inwards from the coupling section (16) which couples said application sections (14), the radially outer intermediate space (20) or/and the radially inner intermediate space (18) being of increased width in its region (24, 22) which adjoins the coupling section (16).

8. Method according to one of Claims 5 to 7,
**characterized in that** step b) comprises a cutting process on the application body (12) in the region of the at least one of the coupling sections (16).

9. Method according to Claim 7 or Claim 8, if referred back to Claim 7,
**characterized in that** step b) comprises a shaping process on the application body (12) in the region of the at least one of the coupling sections (16), at least some of the material of the application body (12) being displaced in the direction of at least one region (22, 24) of increased width of an intermediate space (18, 20) between adjacent application sections (14) during the shaping process.

## Revendications

1. Dispositif de sollicitation en force pour un embrayage à friction, comprenant un corps de sollicitation annulaire (12) avec une pluralité de parties de sollicitation (14) se succédant en direction circonférentielle et s'étendant essentiellement radialement, ainsi qu'avec des parties d'accouplement (16) accouplant chaque fois deux parties de sollicitation voisines (14) en étant formées en une pièce avec ces dernières, sachant que le corps de sollicitation (12) présente, dans la région d'au moins une des parties d'accouplement (16), une plus petite épaisseur de matériau que dans la région des parties de sollicitation (14),
**caractérisé en ce que** deux parties de sollicitation voisines (14) sont chaque fois séparées, radialement à l'extérieur et radialement à l'intérieur de la partie d'accouplement (16) qui les accouple, par des espaces intermédiaires (18, 20) s'étendant essentiellement radialement, et **en ce que** l'espace intermédiaire (20) radialement extérieur ou/et l'espace intermédiaire (18) radialement intérieur est réalisé de largeur agrandie dans sa région (24, 22) se raccordant à la partie d'accouplement (16).

2. Dispositif de sollicitation en force selon la revendication 1, **caractérisé en ce que** le corps de sollicitation (12) est formé d'un matériau en tôle.

3. Dispositif de sollicitation en force selon l'une quelconque des revendications 1 à 2, **caractérisé en ce que** ladite au moins une partie d'accouplement (16) est réalisée d'épaisseur réduite par usinage par enlèvement de matière ou/et par usinage par déformation plastique.

4. Embrayage à friction, comprenant au moins un dispositif (10) de sollicitation en force selon l'une quelconque des revendications précédentes.

5. Procédé de fabrication d'un dispositif (10) de sollicitation en force selon l'une quelconque des revendications 1 à 3, comprenant les étapes suivantes :
a) réalisation d'un corps de sollicitation annulaire (12) avec une pluralité de parties de sollicitation (14) se succédant en direction circonférentielle et s'étendant essentiellement radialement, ainsi qu'avec des parties d'accouplement (16) accouplant chaque fois deux parties de sollicitation voisines (14) en étant formées en une pièce avec ces dernières,
b) réduction de l'épaisseur du matériau du corps de sollicitation (12) dans la région d'au moins une des parties d'accouplement (16).

6. Procédé selon la revendication 5, **caractérisé en ce que** l'étape a) comprend le découpage du corps de sollicitation (12) dans un matériau en tôle.

7. Procédé selon la revendication 5 ou 6, **caractérisé en ce que** l'étape a) comprend la réalisation du corps de sollicitation (12) avec, entre des parties de sollicitation voisines (14), radialement à l'extérieur et radialement à l'intérieur de la partie d'accouplement (16) qui les accouple, des espaces intermédiaires (18, 20) s'étendant essentiellement radialement, sachant que l'espace intermédiaire (20) radialement extérieur ou/et l'espace intermédiaire (18) radialement intérieur est réalisé de largeur agrandie dans sa région (24, 22) se raccordant à la partie d'accouplement (16).

8. Procédé selon l'une quelconque des revendications 5 à 7, **caractérisé en ce que** l'étape b) comprend un usinage par enlèvement de matière du corps de sollicitation (12) dans la région de ladite au moins une des parties d'accouplement (16).

9. Procédé selon la revendication 7 ou 8, dans la mesure où elle se réfère à la revendication 7, **caractérisé en ce que** l'étape b) comprend un usinage par déformation plastique du corps de sollicitation (12) dans la région de ladite au moins une des parties d'accouplement (16), sachant que, lors de l'usinage par déformation plastique, au moins une partie du matériau du corps de sollicitation (12) est repoussée en direction d'au moins une région (22, 24) de largeur agrandie d'un espace intermédiaire (18, 20) entre des parties de sollicitation voisines (14).
